# FASCICULE DE BREVET EUROPEEN

(11) **EP 0 973 683 B1**
(45) Date de publication et mention de la délivrance du brevet: **20.02.2002**
(21) Numéro de dépôt: 98920594.3
(22) Date de dépôt: 08.04.1998
(51) Int. Cl.: B65G 51/03

(54) **DISPOSITIF D'AIGUILLAGE POUR INSTALLATION DE TRANSPORT D'OBJECTS**
WEICHENANORDNUNG FÜR EINE TRANSPORTANLAGE FÜR GEGENSTÄNDEN
SWITCHING DEVICE FOR CONVEYOR SYSTEM INSTALLATION

(30) Priorité: 08.04.1997 FR 9704514
(43) Date de publication de la demande: 26.01.2000
(73) Titulaire: SIDEL Société anonyme, 76930 Octeville-sur-Mer (FR)
(72) Inventeur: BERNARD, Frédéric, F-59650 Villeneuve d'Ascq (FR)
(74) Mandataire: Duthoit, Michel
(86) Numéro de dépôt international: FR9800716
(87) Numéro de publication internationale: WO9845196

(56) Documents cités:
- EP-A- 0 649 804
- FR-A- 886 656
- US-A- 5 100 265

## Description

La présente invention concerne un dispositif d'aiguillage pour installation de transport d'objets tels que, notamment, bouteilles, flacons ou autres, ainsi qu'une installation de transport par jet d'air équipée d'un tel dispositif.

Dans le domaine du transport de bouteilles par jet d'air, il est fréquent de rencontrer des installations présentant plusieurs lignes de convoyage fonctionnant en parallèle. Dans ce cas, il est généralement nécessaire de pouvoir transférer les bouteilles d'une ligne de convoyage à une autre.

Pour cela, on connaît différents dispositifs d'aiguillage tels que, notamment, les aiguillages en Y. Ces derniers permettent soit un passage sur l'une des lignes sans changement de direction, soit un transfert de l'autre ligne sur cette dernière.

Bien que satisfaisant dans certaines configurations simples, ils ne permettent pas toutefois de résoudre tous les cas de figures.

Ainsi, lorsque l'on a affaire à une installation présentant deux lignes de convoyage parallèles entre lesquelles on veut pouvoir, transférer occasionnellement des bouteilles aussi bien dans un sens que dans l'autre, il faut alors employer quatre aiguillages en Y montés en série et tête bêche.

Afin d'éviter une telle disposition complexe, il a déjà été développé des dispositifs d'aiguillage pouvant remplir l'ensemble de ces fonctions sans avoir à être dédoublés. Il s'agit, par exemple, d'aiguillage à plateau tournant muni de lignes de transfert, orthogonales à l'axe de rotation dudit plateau et susceptibles de correspondre, selon les différentes alternatives possibles, avec les lignes de convoyage en entrée et en sortie de l'aiguillage.

Toutefois, un inconvénient de tels dispositifs est qu'il nécessite un changement de direction desdites lignes de convoyage en amont et en aval du plateau, et ceci même si l'on souhaite que les bouteilles traversent l'aiguillage sans changement de ligne.

Or, un tel infléchissement de trajectoire entraîne des diminutions de cadence et/ou augmente le risque d'endommager les bouteilles transportées.

Un autre inconvénient des dispositifs d'aiguillage à plateau tournant réside dans le fait qu'ils ne sont pas optimum quand il s'agit de les utiliser dans des installations comportant trois ou plus lignes de convoyage en parallèle. Ils n'offrent alors qu'un nombre limité de solutions de transfert d'une ligne à l'autre et obligent, de nouveau, à des dédoublements.

Le but de la présente invention est de proposer un dispositif d'aiguillage qui permette de pallier les inconvénients précités et n'entraîne pas de changement d'orientation de trajectoire lorsque les objets transportés doivent passer à travers ledit dispositif sans changement de ligne de convoyage.

Un autre but de la présente invention est de proposer un dispositif d'aiguillage permettant d'augmenter le nombre de combinaisons possibles de transfert des objets transportés d'une ligne de convoyage à l'autre.

D'autres buts et avantages de la présente invention apparaîtront au cours de la description qui va suivre qui n'est donnée qu'à titre indicatif et qui n'a pas pour but de la limiter.

La présente invention concerne un dispositif d'aiguillage pour installation de transport d'objets tels que, notamment, bouteilles, flacons ou autres, comprenant, au moins partiellement, plusieurs lignes de convoyage desdits objets, ledit dispositif d'aiguillage, destiné à être placé sur la trajectoire desdits objets, étant apte à permettre leur transfert, entre l'entrée et la sortie dudit dispositif, d'au moins une des lignes de convoyage à une autre et/ou leur passage sans changement de ligne de convoyage, caractérisé par le fait qu'il est constitué d'un barillet de section polygonale, apte à pivoter autour de son axe longitudinal de manière à permettre le positionnement alternatif de chacune de ses faces latérales dans le prolongement desdites lignes de convoyage, chacune desdites faces latérales étant munie d'au moins une ligne de transfert orientée selon une des alternatives possibles d'aiguillage desdits objets.

La présente invention concerne également une installation de transport par jet d'air d'objets tels que, notamment, bouteilles, flacons ou autres, équipée d'un dispositif d'aiguillage tel que décrit ci-dessus.

L'invention sera mieux comprise à la lecture de la description suivante, accompagnée des dessins en annexe qui en font partie intégrante et parmi lesquels :
- la figure 1 décrit, en perspective, un exemple de réalisation du dispositif d'aiguillage conforme à l'invention, équipant un exemple d'installation de transport dans laquelle il peut être utilisé.
- les figures 2a à 2c illustrent, en vue de dessous, la configuration de différentes faces du barillet constituant le dispositif d'aiguillage représenté à la figure 1,
- la figure 3 est une vue schématique en section, réalisée selon la ligne III-III représentée aux figures 2a à 2c précédentes,
- les figures 4a à 4e illustrent, de manière schématique, la configuration des différentes faces d'un barillet constituant un autre exemple de mise en oeuvre du dispositif d'aiguillage conforme à l'invention.

La présente invention concerne un dispositif d'aiguillage pour installation de transport d'objets tels que, notamment, bouteilles, flacons ou autres.

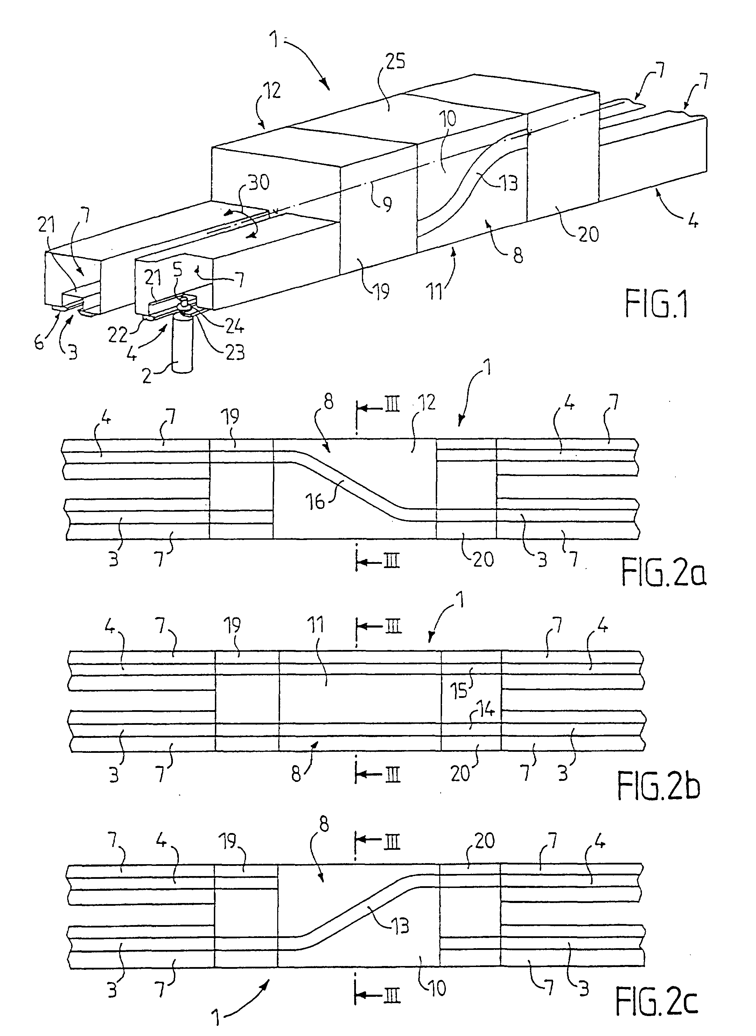

Comme représenté à la figure 1, le dispositif d'aiguillage 1 conforme à l'invention est destiné à être placé sur la trajectoire des objets 2 que l'on souhaite transporter, l'installation correspondante comprenant, au moins partiellement, plusieurs lignes 3, 4 de convoyage.

Comme développé plus loin, il s'agit, notamment d'installations de transport par jet d'air destinées, par exemple, à des objets 2 munis d'un goulot 5. Dans de telles installations, lesdites lignes de convoyage 3, 4 comprennent, notamment, des rails supports 6 aptes à coopérer avec lesdits objets 2 au niveau desdits goulots 5, et des chambres de soufflage 7, aptes à permettre la projection d'un flux d'air sur lesdits objets 2 de manière à les propulser.

Ledit dispositif d'aiguillage 1 permet le transfert, entre son entrée et sa sortie, desdits objets 2 d'au moins une des lignes de convoyage à une autre et/ou leur passage sans changement de ligne de convoyage.

Il peut ainsi être utilisé, comme les dispositifs d'aiguillage en Y classiques, avec deux lignes de convoyage en entrée et une en sortie, ou l'inverse. Grâce à sa structure, il peut également être utilisé avec plusieurs lignes de convoyage à la fois en entrée et en sortie. Par « plusieurs », il faut entendre naturellement « au moins deux ».

Pour cela, selon l'invention, il est constitué d'un barillet 8 de section polygonale, apte à pivoter autour de son axe longitudinal 9 de manière à permettre le positionnement alternatif de chacune de ses faces latérales 10, 11, 12, dans le prolongement desdites lignes de convoyage 3, 4. Ledit barillet 8 présente donc une forme prismatique, chacune de ses faces latérales 10, 11, 12 étant munie, en outre, d'au moins une ligne de transfert 13 ; 14,15 ; 16 orientée selon une des alternatives possibles d'aiguillage desdits objets 2.

Par « alternative possible d'aiguillage », on entend que lesdites faces latérales présentent chacune au moins pour certaines d'entre elles 10,11, 12, une ou des lignes de transfert permettant une des orientations souhaitées des objets 2, à savoir, soit le passage sans changement de ligne de convoyage, et ceci pour l'ensemble des lignes de convoyage, soit le transfert d'une ligne de convoyage à une autre pour une ou plusieurs des lignes de convoyage, les objets 2 convoyés sur les éventuelles autres lignes ne voyant pas leur trajectoire modifiée.

On constate ainsi, chaque face remplissant une fonction spécifique, que la trajectoire des objets 2 peut être optimisée dans chacune des alternatives. En particulier, en cas de passage sans changement de ligne, la traversée du dispositif d'aiguillage 1 peut se faire de manière rectiligne et permet donc d'éviter des ruptures de rythme.

Selon le mode particulier de réalisation représenté, le barillet 8 présente quatre faces latérales. Toutefois, toute forme prismatique présentant au moins trois faces latérales planes pourrait également être utilisée.

Si l'on se reporte maintenant aux figures 2a à 2c, on constate que sur les faces 10, 12 permettant le passage d'une ligne de convoyage 3, 4 à une autre, les lignes de transfert 13, 16 présentent, éventuellement, au niveau des changements de direction, un angle légèrement arrondi. Dans le cas des faces 11 permettant un passage sans transfert de ligne de convoyage, les lignes de transfert 14, 15 sont, par exemple, comme précédemment évoqué dans le prolongement rectiligne desdites lignes de convoyage 3, 4.

Lesdites faces 10, 12 permettant un changement de lignes de convoyage pourront également présenter deux lignes de transfert, alors prévues en Y, pour autoriser, en outre, un passage sans changement de ligne pour l'une des lignes de convoyage 2, 3.

L'axe longitudinal 9 dudit barillet 8 est, notamment, destiné à être orienté sensiblement parallèlement aux lignes de convoyage 3, 4 et comme illustré à la figure 1, se trouve au-dessus de ces dernières c'est-à-dire du côté opposé à la trajectoire des objets 2.

Chaque face latérale 10, 11, 12 présente, par exemple, une dimension supérieure à l'entraxe prévu entre les lignes de convoyage 3, 4 en entrée et/ou en sortie dudit dispositif d'aiguillage 1.

Selon l'exemple particulier de réalisation représenté, ledit barillet 8 est prévu de section sensiblement carrée, une première 11 de ses faces latérales permettant le passage sans changement de ligne de convoyage, une seconde 12 permettant le passage d'une des files 4 de convoyage, dite file droite, à l'autre file 3 de convoyage, dite file gauche, une troisième 10 permettant le passage de ladite file gauche 3 à la dite file droite 4.

Comme précédemment évoqué, ledit barillet 8 pourra également présenter une section triangulaire, l'ensemble des possibilités d'aiguillage étant alors également rempli dans le cas d'une installation comprenant, comme représentée, deux lignes de convoyage 3, 4 en entrée et en sortie dudit dispositif 1. Toutefois, une section quadrangulaire présente l'avantage d'offrir une face supplémentaire pouvant être équipée en fonction de la structure de l'installation dans laquelle ledit dispositif d'aiguillage 1 est inséré.

Avec une section carrée, par rotation d'un quart de tour dudit barillet 8 selon la flèche repérée 30, on change ainsi à volonté d'alternative d'aiguillage des objets 2.

Ladite première face 11 se trouve, par exemple, entre lesdites seconde et troisième faces 12, 10.

Ladite première face 11 présente, notamment, deux lignes de transfert 14, 15, parallèles entre elles. Quant auxdites seconde 12 et troisième 10 faces latérales, elles présentent chacune une ligne de transfert 13, 16 reliant les lignes de convoyage 3, 4 concernées selon une direction sensiblement parallèle à la diagonale de la face latérale 10, 12 correspondante du barillet 8.

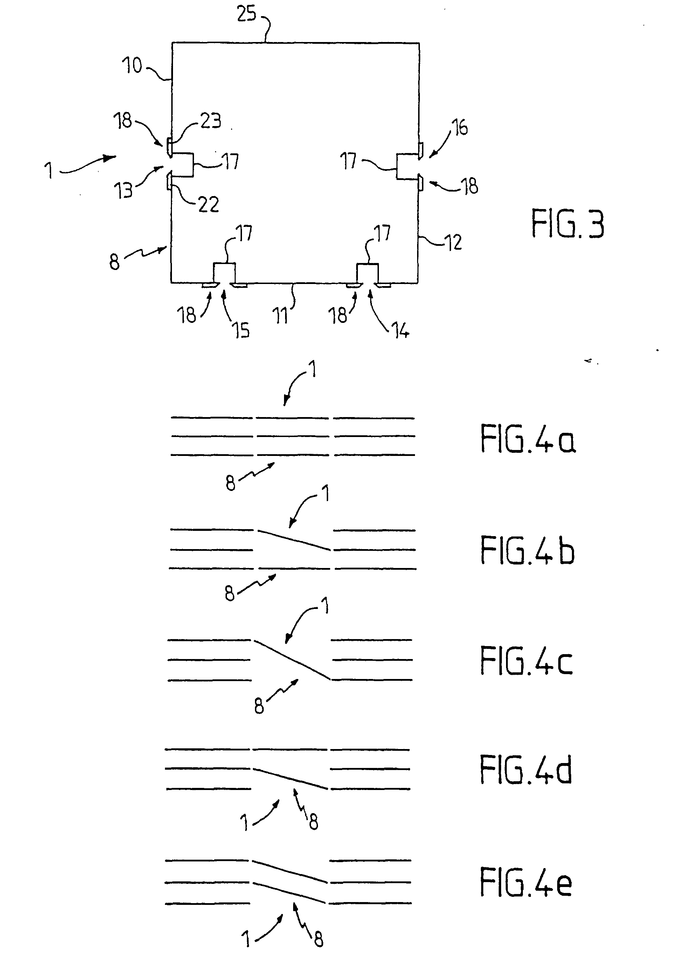

Si l'on se reporte maintenant à la figure 3, on constate que chaque ligne de transfert 13 ; 14 , 15 ; 16 est constituée, par exemple d'un canal 17 apte à accueillir une extrémité 5 desdits objets 2, et d'un rail support 18, prévu sous ledit canal 17, apte à coopérer avec ladite extrémité 5.

Ledit dispositif d'aiguillage 1 comprend, en outre, éventuellement, au moins au niveau desdites lignes de transfert 13 ; 14, 15 ; 16 des guides latéraux, non représentés. Ces derniers ont pour fonction, notamment, d'améliorer le guidage des objets transportés. En cas d'utilisation, ils donnent audit barillet 8, en quelque sorte l'aspect d'un hérisson.

Si l'on se reporte de nouveau à la figure 1, on constate que, selon l'exemple particulier de réalisation représenté, ledit dispositif d'aiguillage 1 comprend, en amont et en aval dudit barillet 8, une chambre de circulation 19, 20 apte à favoriser l'interface entre ledit barillet 8 et lesdites lignes de convoyage 3, 4, et ceci notamment en fonction de la structure de l'installation utilisée.

Lesdites chambres de circulation 19, 20 et ledit barillet 8 sont, par exemple, de même section et/ou dans le prolongement les uns des autres lorsque ledit barillet 8 est en position, lesdites chambres de circulation 19, 20 étant prévues fixes, c'est-à-dire ne tournant pas contrairement audit barillet 8.

Lesdites chambres de circulation 19, 20, sont naturellement munies de lignes de convoyage des objets 2, notamment dans le prolongement rectiligne desdites lignes de convoyage 3, 4 de l'installation dans laquelle ledit dispositif 1 est inséré. Comme pour les lignes de transfert 13; 14, 15 ; 16, elles présentent, par exemple, une structure formée d'un canal et d'un rail support .

Lesdites chambres de circulation 19, 20 pourront en outre, éventuellement, être elles aussi munies de guides latéraux des objets 2.

Cela étant, ledit dispositif d'aiguillage 1 est muni, par exemple, d'un moteur électrique, non représenté, apte à entraîner ledit barillet 8 en rotation.

En se reportant aux figures 4a à 4e, on constate, comme précédemment évoqué, que le dispositif d'aiguillage conforme à l'invention peut également être muni de plus de deux lignes de convoyage en entrée et en sortie. Ici, il s'agit d'une installation comportant trois lignes de convoyage en entrée et en sortie.

Dans le cas illustré, le barillet 8 comprend, par exemple, cinq faces latérales de manière à permettre l'ensemble des alternatives possibles d'aiguillage vers la droite.

L'invention concerne également une installation de transport par jet d'air d'objets 2 tels que, notamment, bouteilles, flacons ou autres, équipée d'un dispositif d'aiguillage 1 tel que présenté ci-dessus.

Comme représenté à la figure 1 et comme précédemment évoqué, il s'agit, par exemple, d'une installation comprenant des rails supports 6, aptes à coopérer avec lesdits objets 2 le long de ses lignes de convoyage 3, 4, et des chambres de soufflage 7 aptes à permettre la projection d'un flux d'air sur lesdits objets 2 de manière à les propulser le long desdites lignes de convoyage 3, 4.

Selon l'exemple particulier de réalisation illustré, lesdites chambres de souffage 7 sont disposées au-dessus desdits rails supports 6. De plus, lesdites chambres de soufflage 7 présentent des canaux 21 dans lesquels une extrémité 5 desdits objets 2 peut circuler sous l'action de jet d'air provenant desdites chambres de soufflage 7 à travers des fentes, non représentées, réalisées sur les parois desdits canaux 17. Dans ce cas, lesdits rails supports 6 se trouvent sous lesdits canaux 21 et sont constitués, notamment, de deux rampes 22, 23 se trouvant de chaque côté desdits canaux 21 correspondant.

De telles installations peuvent être utilisées pour transporter des objets 2 présentant, par exemple, une excroissance 24 au niveau de leur goulot 5, ledit goulot 5 circulant dans ledit canal 21 et ladite excroissance 24 coopérant avec lesdites rampes 22, 23.

Cela étant, selon un tel exemple de mise en oeuvre, les rails supports 6, 18 de ladite installation et dudit dispositif d'aiguillage 1 sont prévus dans le prolongement les uns des autres ainsi que lesdits canaux 21, 17. De plus, lesdits canaux 17 du dispositif d'aiguillage 1 sont munis, éventuellement, de fentes permettant la propulsion des jets d'air sur les objets 2 tandis que lesdits rails supports 18 dudit dispositif d'aiguillage 1 sont constitués de deux rampes prévues de chaque côté desdits canaux 17, et ceci aussi bien pour ledit barillet que, le cas échéant, pour lesdites chambres de circulation 19, 20.

L'intégration dudit dispositif d'aiguillage 1 dans l'installation de transport par jet d'air décrite est ainsi optimisée. A ce sujet, il est à noter que, dans ce cas, lesdites chambres de circulation 19, 20, sont particulièrement utiles. En effet, elles favorisent une jonction étanche entre lesdites chambres de soufflage 7 des lignes de convoyage 3, 4 et ledit barillet 8. Le transport des objets 2 lors de l'aiguillage est ainsi favorisé avec un minimum de déperdition d'air.

Si une augmentation de pression dans ledit barillet 8 était toutefois nécessaire, une soufflerie, non représentée, pourrait être prévue, par exemple sur une face libre 25 dudit barillet 8.

Toutefois, ladite face 25 peut, selon un autre mode de réalisation, présenter des lignes de transfert, selon une des alternatives possibles d'aiguillage, éventuellement redondante par rapport aux alternatives déjà présentes sur les autres faces 10, 11, 12.

Toujours pour favoriser le transport des objets 2, des guides latéraux non représentés, peuvent également être prévus le long des lignes de convoyage 3, 4 de ladite installation.

Naturellement, d'autres modes de mise en oeuvre de la présente invention à la portée de l'homme de l'art auraient pu être envisagés sans pour autant sortir du cadre de l'invention.

## Revendications

1. Dispositif d'aiguillage (1) pour installation de transport d'objets (2) tels que, notamment, bouteilles, flacons ou autres, comprenant, au moins partiellement, plusieurs lignes (3, 4) de convoyage desdits objets (2), ledit dispositif d'aiguillage (1), destiné à être placé sur la trajectoire desdits objets (2), étant apte à permettre leur transfert, entre l'entrée et la sortie dudit dispositif (1), d'au moins une des lignes de convoyage à une autre et/ou leur passage sans changement de ligne de convoyage, **caractérisé par le fait qu'**il est constitué d'un barillet (8) de section polygonale, apte à pivoter autour de son axe longitudinal (9) de manière à permettre le positionnement alternatif de chacune de ses faces latérales (10, 11, 12) dans le prolongement desdites lignes de convoyage (3, 4), chacune desdites faces latérales (10, 11, 12) étant munie d'au moins une ligne de transfert (13 ; 14, 15 ; 16) orientée selon une des alternatives possibles d'aiguillage desdits objets (2).

2. Dispositif selon la revendication 1, dans lequel l'axe longitudinal (9) dudit barillet (8) est destiné à être orienté sensiblement parallèlement aux lignes de convoyage (3, 4).

3. Dispositif selon la revendication 1, dans lequel l'axe longitudinal (9) dudit barillet (8) est destiné à se trouver au-dessus desdites lignes de convoyage (3, 4).

4. Dispositif selon la revendication 1, dans lequel chaque face latérale (10, 11, 12) présente une dimension supérieure à l'entraxe prévu entre les lignes de convoyage (3, 4) en entrée et/ou en sortie.

5. Dispositif selon la revendication 1, dans lequel ledit barillet (8) est prévu de section sensiblement carré, une première (11) de ses faces latérales permettant le passage sans changement de ligne de convoyage, une seconde (12) permettant le passage d'une (4) des files de convoyage, dite file droite, à l'autre file (3) de convoyage, dite file gauche, une troisième (10) permettant le passage de ladite file gauche (3) à ladite file droite (4).

6. Dispositif selon la revendication 5, dans lequel ladite première face (11) présente deux lignes de transfert (14, 15) parallèles entre elles et/ou dans le prolongement rectiligne de chacune des lignes de convoyage correspondantes (3, 4) et/ou lesdites seconde (12) et troisième (10) faces latérales présentent chacune une ligne de transfert (13, 16) reliant les lignes de convoyage (3, 4) concernées selon une direction sensiblement parallèle à la diagonale de la face latérale (12, 10) correspondante dudit barillet (8).

7. Dispositif selon la revendication 1, dans lequel chaque ligne de transfert (13 ; 14, 15, 16) est constituée d'un canal (17), apte à accueillir une extrémité (5) desdits objets (2), et d'un rail support (18) prévu sous ledit canal (17), apte à coopérer avec ladite extrémité (5).

8. Dispositif selon la revendication 1, comprenant en outre, au moins au niveau desdites lignes de transfert (13 ;14, 15 ; 16) des guides latéraux.

9. Dispositif selon la revendication 1, comprenant, en amont et en aval dudit barillet (8), une chambre de circulation (19, 20) apte à favoriser l'interface entre ledit barillet (8) et lesdites lignes de convoyage (3, 4).

10. Installation de transport par jet d'air d'objets (2), tels que, bouteilles, flacons ou autres, équipée d'un dispositif d'aiguillage selon la revendication 1.

## Claims

1. Switching device (1) for an installation for conveying objects (2) such as, in particular, bottles, flasks or the like, including, at least partially, several lines (3, 4) for conveying said objects (2), said switching device (1), intended to be placed on the path of said objects (2), being capable of enabling them to be transferred, between the input and the output of said device (1), from at least one of the conveying lines to another and/or of enabling them to pass on without changing conveying lines, **characterised by** the fact that it is constituted by a barrel (8) having a polygonal cross-section, capable of pivoting about its longitudinal axis (9) so as to permit the alternative positioning of each of its lateral faces (10, 11, 12) in the continuation of said conveying lines (3, 4), each of said side faces (10, 11, 12) being provided with at least one transfer line (13; 14, 15; 16) orientated according to one of the possible alternatives for switching said objects (2).

2. Device according to claim 1, in which the longitudinal axis (9) of the barrel (8) is designed to be orientated substantially parallel to the conveying lines (3, 4).

3. Device according to claim 1, in which the longitudinal axis (9) of said barrel (8) is designed to be located above said conveying lines (3, 4).

4. Device according to claim 1, in which each lateral face (10, 11, 12) has a dimension greater than the distance between centres provided between the conveying lines (3, 4) at the input and/or the output.

5. Device according to claim 1, in which said barrel (8) is designed to be of a substantially square cross-section, with a first (11) of its lateral faces permitting passage without changing conveying lines, a second (12) permitting passage from one (4) of the conveying lines, or so-called righthand line, to the other (3) conveying line, or so-called left-hand line, and a third one (10) permitting passage from said left-hand line (3) to said righthand line (4).

6. Device according to claim 5, in which said first face (11) has two transfer lines (14, 15) parallel to one another and/or in the rectilinear continuation of each of the corresponding conveying lines (3, 4) and/or said second (12) and third (10) lateral faces each has a transfer line (13, 16) connecting the conveying lines (3, 4) concerned in a direction substantially parallel to the diagonal of the corresponding lateral face (12, 10) of said barrel (8).

7. Device according to claim 1, in which each transfer line (13; 14, 15; 16) is constituted by a channel (17), capable of receiving one end (5) of said objects (2), and by a support rail (18) provided under said channel (17), capable of co-operating with said end (5).

8. Device according to claim 1, further including, at least in the area of said transfer lines (13; 14, 15; 16), lateral guides.

9. Device according to claim 1, including, upstream and downstream of said barrel (8), a travel chamber (19, 20) capable of facilitating the interface between said barrel (8) and said conveying lines (3, 4).

10. Installation for conveying by air jet objects (2) such as bottles, flasks or the like, equipped with a switching device according to claim 1.

## Patentansprüche

1. Aufspaltungsvorrichtung (1) für Anlage zur Beförderung von Gegenständen (2), wie nämlich Flaschen, Fläschchen oder dergleichen, umfassend, wenigstens zum Teil, mehrere Beförderungsbahnen (3, 4) für die genannten Gegenstände (2), wobei die genannte Aufspaltungsvorrichtung (1), die auf den Weg der genannten Gegenstände (2) anzubringen ist, geeignet ist, deren Übergang, zwischen dem Eingang und dem Ausgang der genannten Vorrichtung (1), wenigstens von einer der Beförderungsbahnen auf eine andere und/oder deren Durchgang ohne Beförderungsbahnwechslung, zu erlauben, **dadurch gekennzeichnet, daß** sie aus einer im Querschnitt vieleckigen Schleuse (8) besteht, die geeignet ist, um ihre Längsachse (9) zu schwenken, so daß die abwechselnde Positionierung jeder ihrer Seitenflächen (10, 11, 12) in der Verlängerung der genannten Beförderungsbahnen (3, 4) erlaubt wird, wobei die genannten Seitenflächen (10, 11, 12) jeweils mit wenigstens einer Übergangsbahn (13 ; 14, 15 ; 16) versehen ist, die einer der möglichen Aufspaltungsalternativen für die genannten Gegenstände (2) entsprechend orientiert ist.

2. Vorrichtung nach Anspruch 1, bei der die Längsachse (9) der genannten Schleuse (8) dazu bestimmt ist, im wesentlichen parallel zu den Beförderungsbahnen (3, 4) orientiert zu werden.

3. Vorrichtung nach Anspruch 1, bei der die Längsachse (9) der genannten Schleuse (8) dazu bestimmt ist, sich oberhalb der genannten Beförderungsbahnen (3, 4) orientiert zu befinden.

4. Vorrichtung nach Anspruch 1, bei der jede Seitenfläche (10, 11, 12) eine größere Abmessung aufweist als der am Eingang und/oder am Ausgang zwischen den Beförderungsbahnen (3, 4) vorgesehene Achsenabstand ist.

5. Vorrichtung nach Anspruch 1, bei der die genannte Schleuse (8) im Querschnitt im wesentlichen viereckig vorgesehen ist, wobei eine erste (11) ihrer Seitenfläche den Durchgang ohne Beförderungsbahnwechslung erlaubt, eine zweite (12) den Übergang von einer (4) der Beförderungsbahnen, die rechte Bahn genannt wird, auf die andere Beförderungsbahn (3), die linke Bahn genannt wird, erlaubt, eine dritte (10) den Übergang von der genannten linken Bahn (3) auf die genannte rechte Bahn erlaubt.

6. Vorrichtung nach Anspruch 5, bei der die genannte erste Fläche (11) zwei parallel zu einander und/oder in der geradlinigen Verlängerung jeder der entsprechenden Beförderungsbahnen (3, 4) verlaufende Übertragungsbahnen (14, 15) aufweist und/oder die genannte zweite (12) und dritte (10) Seitenfläche je eine Übertragungsbahn (13, 16) aufweist, die die betreffenden Beförderungsbahnen (3, 4) in einer Richtung im wesentlichen parallel zur Diagonale der entsprechenden Seitenfläche (12, 10) der genannten Schleuse (8) verbindet.

7. Vorrichtung nach Anspruch 1, bei der jede Übertragungsbahn (13 ; 14, 15 ; 16) aus einem Kanal (17), geeignet, ein Ende (5) der genannten Gegenstände (2) aufzunehmen, und einer unterhalb des genannten Kanals (17) vorgesehenen Tragschiene (18), geeignet, mit dem genannten Ende (5) zusammenzuwirken, besteht.

8. Vorrichtung nach Anspruch 1, umfassend außerdem, wenigstens im Bereich der genannten Übertragungsbahnen (13 ; 14, 15 ; 16), Seitenführungen.

9. Vorrichtung nach Anspruch 1, umfassend außerdem, stromauf- und -abwärts der genannten Schleuse (8), eine Umlaufkammer (19, 20), geeignet, die Schnittstelle zwischen der genannten Schleuse (8) und den genannten Beförderungsbahnen (3, 4) zu fördern.

10. Lufistrahl-Beförderungsanlage für Gegenstände (2), wie Flaschen, Fläschchen oder dergleichen, ausgerüstet mit einer Aufspaltungsvorrichtung nach Anspruch 1.
